# EUROPEAN PATENT APPLICATION

(11) **EP 4 844 839 A1**
(43) Date of publication of application: **25.11.2026**
(21) Application number: 25178309.8
(22) Date of filing: 22.05.2025
(51) Int. Cl.: H01M 4/62, H01M 10/052

(54) **BINDERS FOR LITHIUM-ION BATTERY**

(71) Applicant: Arkema, Inc., King of Prussia, PA 19406 (US)
(72) Inventor: KENT, Daniel, KING OF PRUSSIA, 19406 (US); BUCCELLATO, Christopher, KING OF PRUSSIA, 19406 (US)
(74) Representative: Arkema Patent

(57) **Abstract**

The present invention relates to a binder composition comprising agglomerated particles having an average diameter lower than 400 µm and the maximum diameter of said agglomerated particles is greater than 600 µm.

## Description

### Field of the invention

The present invention relates to a composition used as binder for electrodes in electrochemical devices, such as lithium-ion battery.

### Background of the invention

With the increase in technology development and demand for mobile devices, the demand for secondary batteries is also rapidly increasing. Among them, lithium secondary batteries are widely used as an energy source for various electronic products as well as various mobile devices because of their high energy density and high operating voltage and excellent storage and lifetime characteristics. In addition, the secondary battery has attracted attention as an energy source of an electric vehicle, a hybrid electric vehicle, etc., which are proposed as a solution for air pollution of existing gasoline vehicles and diesel vehicles using fossil fuel. Therefore, the types of applications using the secondary battery are currently much diversified due to the advantages of the secondary battery, and it is expected that the secondary battery will be applied to many fields and products in the future.

The secondary battery includes a structure in which a separator is placed between both electrodes including a positive electrode and a negative electrode. The electrode has a structure in which a composite layer in which an active material is dispersed in a binder matrix is coated on an electrode current collector.

Currently there are two primary means for producing electrodes: a "wet" method and a "dry" method. In the wet method, a polymeric binder in the form of a solvent solution or dispersion is blended with one or more active powdery electrode forming materials to form a slurry dispersion or paste. This dispersion or paste is then applied to one or both surfaces of an electroconductive substrate, and dried to form a coherent composite electrode layer. The electrode layer may then be calendared. This method is shown in U.S. Pat. No. 5,776,637 and U.S. Pat. No. 6,200,703, where a fluoropolymer binder is dissolved in NMP. There is still a need to improve the properties of the electrodes. The present invention provides a solution to the drawbacks observed in the prior art.

Surprisingly, it has now been found that by using binder made of agglomerated particles having a specific size and distribution a better adhesion can be achieved.

### Summary of the invention

In a first aspect, the present invention relates to a binder composition comprising agglomerated particles having an average diameter lower than 400 µm and the maximum diameter of said agglomerated particles is greater than 600 µm.

The use of the binder composition as presently disclosed in the present application allows an improvement of the electrode performances due to an enhanced adhesion of the active material to the current collector. This improvement is achieved with the specific binder composition having the particle size as defined in the present application.

In a preferred embodiment, at least 1% by weight of the agglomerated particles has a diameter greater than 600 µm.

In a preferred embodiment, at least 95% by weight of the agglomerated particles has a diameter lower than 400 µm.

In a preferred embodiment, the viscosity of a 10wt% solution in N-methyl-2-pyrrolidone of said agglomerated particles at 10.7 s⁻¹ is greater than 11 Pa.s.

In a preferred embodiment, said agglomerated particles comprises a fluorinated polymer **P1** and a hydrophilic polymer P2.

In a preferred embodiment, said fluorinated polymer **P1** comprises recurring units derived from a fluorinated monomer **M1a** selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)ₙCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R2 is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof.

In a preferred embodiment, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R' is selected from the group consisting of C₁-C₁₈ alkyl optionally substituted by one or more -OH, -CO₂H, -SO₃H, -OC(O)R⁸, -C(O)O-R⁸ or a five- to six-membered heterocycle comprising at least nitrogen atom in the ring ; R⁸ being selected from the group consisting of C₁-C₆ alkyl and C₆-C₁₂ aryl optionally substituted with one or more -OH, -CO₂H, -SO₃H functional group(s) ; and
optionally said hydrophilic polymer **P2** comprises recurring units derived from a monomer **M2b** selected from the group consisting of monomers of formula (II), (III), (IV), (V), (VI), (VII), (VIII) or mixtures thereof

R¹⁰R¹¹C=C(R¹²)C(O)OH (II)

R¹³R¹⁴C=C(R¹⁵)(OC(O)R¹⁶) (III);

R¹⁷R¹⁸C=CR¹⁹C(O)OC(O)CR²⁰=CR²¹R²² (IV) ;

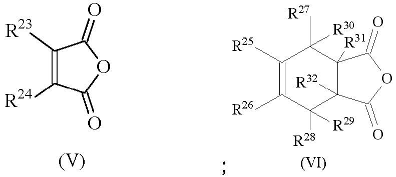

R³³R³⁴C=CR³⁵(CN) (VII);

R³⁶R³⁷C=CR³⁸(C(O)NR³⁹R⁴⁰) (VIII);

wherein R¹⁰, R¹¹ and R¹² are independently selected from the group consisting of H, CO₂H and C₁-C₅ alkyl;
R¹³, R¹⁴ and R¹⁵ are independently selected from the group consisting of H and C₁-C₅ alkyl;
R¹⁶ is C₁-C₅ alkyl;
R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴, R³⁵, R³⁶, R³⁷ and R³⁸ are independently selected from the group consisting of H and C₁-C₅ alkyl ;
R³⁹ and R⁴⁰ are independently selected from the group consisting of H and C₁-C₁₀ alkyl optionally substituted by one or more functional groups -OH, -CO₂H, SO₃H, - C(O)OR⁴¹, -OC(O)R⁴¹ ; R⁴¹ is selected from the group consisting of C₁-C₅ alkyl and C₆-C₁₂ aryl optionally substituted by one or more functional group CO₂H.

In a preferred embodiment, the 10% mass loss temperature of said agglomerated particles is greater than 440°C.

In another aspect, the present invention relates to an electrode-forming composition for Li-ion secondary battery comprising the binder composition according to the present invention, an active material and optionally a conductive agent.

In another aspect, the present invention relates to an electrode for Li-ion secondary battery comprising a current collector, at least one side of said current collector being coated with the electrode-forming composition according to the present invention.

In another aspect, the present invention relates to a Li-ion secondary battery comprising an anode, a cathode and a separator, wherein said anode or said cathode is an electrode according to the present invention.

In another aspect, the present invention relates to a method to prepare agglomerated particles as defined in the present application, comprising the steps of:
a) providing powder particles having a maximum diameter lower than 100 µm;
b) applying pressure on the agglomerated particles provided in step a) to form said agglomerated particles as defined in the present application.

In a preferred embodiment, step b) is carried out by applying a pressure greater than 100kg/cm2.

In a preferred embodiment, said agglomerated particles, obtained in step b), have a 10% mass loss temperature greater than the 10% mass loss temperature of the powder particles provided in step a).

In a preferred embodiment, the viscosity of a 10wt% solution of said agglomerated particles, obtained in step b), at 10.7/s is greater than the 10wt% solution of the powder particles provided in step a).

### Detailed description of the invention

The present invention relates, in a first aspect, to a binder composition useful for electrodes in electrochemical devices.

Preferably, said binder composition comprises agglomerated particles. Said agglomerated particles may have an average diameter lower than 400 µm, advantageously lower than 375 µm, preferably lower than 350 µm, more preferably lower than 325 µm, particularly lower than 300 µm, more particularly lower than 275 µm. The average diameter is measured by analyzing the agglomerated particles using Hitachi SU8010 SEM. 179 agglomerated particles were counted and measured to determine the average diameter. Said agglomerated particles may have an average diameter greater than 50 µm, preferably greater than 60 µm, more preferably greater than 70 µm, most preferably greater than 80 µm, particularly greater than 90 µm, more particularly greater than 100 µm.

Preferably, said agglomerated particles have a maximum diameter greater than 600 µm, advantageously greater than 700 µm, preferably greater than 800 µm, more preferably greater than 900 µm, particularly greater than 950 µm, more particularly greater than 1000 µm. The maximum diameter was determined using the Hitachi SU8010 SEM. The largest particle out of the 179 agglomerated particles was determined to be the maximum.

By combining the required average diameter and the maximum diameter as detailed above, the agglomerated particles according to the present invention allows the preparation of a binder composition having improved adhesion.

In a preferred embodiment, at least 1% by weight of the agglomerated particles has a diameter greater than 600 µm. Preferably, at least 1.5 wt% of the agglomerated particles has a diameter greater than 600 µm, more preferably at least 2.0 wt% of the agglomerated particles has a diameter greater than 600 µm, particularly at least 2.5 wt% of the agglomerated particles has a diameter greater than 600 µm, more particularly at least 3.0 wt% of the agglomerated particles has a diameter greater than 600 µm.

As mentioned above, the diameter was determined using the Hitachi SU8010 SEM. The percentages below were based on the 179 agglomerated particles counted and analyzed. In a particular embodiment, at least 0.75% of the agglomerated particles has a diameter greater than 800 µm. Preferably, at least 1.0% of the agglomerated particles has a diameter greater than 800 µm, more preferably at least 1.25% of the agglomerated particles has a diameter greater than 800 µm.

Preferably, at least 0.5% of the agglomerated particles has a diameter greater than 1000 µm. Preferably, at least 0.75 % of the agglomerated particles has a diameter greater than 1000 µm, more preferably at least 1.0 % of the agglomerated particles has a diameter greater than 1000 µm.

In a preferred embodiment, at least 95% by weight of the agglomerated particles has a diameter lower than 400 µm. Preferably, at least 94% by weight of the agglomerated particles has a diameter lower than 400 µm, more preferably at least 93% by weight of the agglomerated particles has a diameter lower than 400 µm, particularly at least 92% by weight of the agglomerated particles has a diameter lower than 400 µm.

In another preferred embodiment the agglomerated particles according to the present invention may have a viscosity of a 10wt% n-methylpyrollidone solution at 10.7 s⁻¹ is greater than 11.0 Pa.s, preferably greater than 11.1 Pa.s, more preferably greater than 11.2 Pa.s, particularly greater than 11.3 Pa.s, more particularly greater than 11.4 Pa.s. To measure the solution viscosity, the solution is prepared in a glass vial containing 10 wt% of particles in N-methyl-2-pyrrolidone (NMP) and is dissolved using a heated roller for 48 hours.

In a preferred embodiment, said agglomerated particles have a 10% mass loss temperature of said agglomerated particles is greater than 440°C, preferably greater than 444°C. The 10% mass loss is measured by TGA. Thermogravimetric analysis (TGA) was conducted on a TA Q5000IR-1 TGA. The powders were placed into the sample holders and heat ramp of 20°C/min was applied up until 800°C.

Preferably, the agglomerated particles are made of at least two polymers, more preferably said agglomerated particles are made of a mixture of at least one fluorinated polymer **P1** and at least one hydrophilic polymer P2.

Said fluorinated polymer **P1** comprises recurring units derived from a vinyl monomer bearing at least one fluorine atom.

Preferably, said fluorinated polymer **P1** comprise recurring units derived from vinylidene fluoride. Hence said fluorinated polymer **P1** can be a homopolymer of vinylidene fluoride. In a particular embodiment, said fluorinated polymer **P1** comprises recurring units of vinylidene fluoride and recurring units derived from one or more monomer **M1a** as detailed below.

Preferably, said fluorinated polymer **P1** may further comprise, in addition to the recurring units derived from vinylidene fluoride, recurring units derived from a monomer **M1a** copolymerizable with vinylidene fluoride. Comonomers compatible with vinylidene fluoride may be halogenated (fluorinated, chlorinated or brominated) or non-halogenated. Said monomer **M1a** may be selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)ₙCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof. Among the trifluoropropenes mention may be mentioned 3,3,3-trifluoropropene. Among the tetrafluoropropenes include 2,3,3,3-tetrafluoropropene, 1,3,3,3-tetrafluoropropene. Among the pentafluoropropene include 1,1,3,3,3-pentafluoropropene or 1,2,3,3,3-pentafluoropropene. Chlorofluoroethylene may refer to either 1-chloro-1-fluoroethylene or 1-chloro-2-fluoroethylene. The isomer 1-chloro-1-fluoroethylene is preferred. Chlorotrifluoropropene is preferably 1-chloro-3,3,3-trifluoropropene or 2-chloro-3,3,3-trifluoropropene.

Advantageously, said monomer **M1a** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluoro(1,3-dioxole) perfluoro(2,2-dimethyl-1,3-dioxole) (PDD), perfluorobutyl ethylene (PFBE), trifluoropropene, tetrafluoropropene, hexafluoroisobutylene, perfluorobutylethylene, pentafluoropropene, bromotrifluoroethylene, chlorofluoroethylene, chlorotrifluoropropene and 2-trifluoromethyl-3,3,3-trifluoro-1-propene or a mixture thereof.

Preferably, said monomer **M1a** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethyl vinyl) ether (PEVE) and perfluoro(propyl vinyl) ether (PPVE); perfluorobutyl ethylene (PFBE), trifluoropropene, tetrafluoropropene, hexafluoroisobutylene, perfluorobutylethylene, pentafluoropropene, bromotrifluoroethylene, chlorofluoroethylene and chlorotrifluoropropene or a mixture thereof.

More preferably, said monomer **M1a** may be selected from the group consisting of vinyl fluoride, trifluoroethylene, chlorotrifluoroethylene, 1,2-difluoroethylene, tetrafluoroethylene, hexafluoropropylene, perfluoro (methyl vinyl) ether, perfluoro (ethyl vinyl) ether, perfluoro (propyl vinyl) ether, perfluorobutyl ethylene, trifluoropropene, tetrafluoropropene, hexafluoroisobutylene, perfluorobutylethylene, pentafluoropropene, bromotrifluoroethylene, chlorofluoroethylene and chlorotrifluoropropene or a mixture thereof.

In particular, said monomer **M1a** may be selected from the group consisting of vinyl fluoride, trifluoroethylene, chlorotrifluoroethylene, 1,2-difluoroethylene, tetrafluoroethylene and hexafluoropropylene or a mixture thereof. More particularly, said monomer **M1a** is hexafluoropropylene.

According to one embodiment, in said fluorinated polymer **P1,** the mass content of recurring units derived from vinylidene fluoride is preferably at least 50%, preferably at least 60%, more preferably greater than 70% and particularly greater than 80% based on the total weight of said fluorinated polymer **P1.** Thus, the mass content of said monomer(s) **M1a** in said fluorinated polymer **P1** is lower than 50%, preferably lower than 40%, preferably lower than 30%, more preferably lower than 20% based on the total weight of said fluorinated polymer **P1.** According to a preferred embodiment, the mass content of said monomer(s) **M1a** in said fluorinated polymer **P1** is between 0.5% and 20%, advantageously between 0.5% and 19%, preferably between 0.5% and 18%, more preferably between 0.5% and 17%, in particular between 0.5% and 16%, more particularly between 0.5% and 15% based on the total weight of said fluorinated polymer **P1.** The mass content of said monomer(s) **M1a** in said fluorinated polymer **P1** may also be between 1% and 20%, advantageously between 1% and 19%, preferably between 1% and 18%, more preferably between 1% and 17%, most preferably between 1% and 16%, in particular between 1% and 15%, more particularly between 1% and 13%, most particularly between 1% and 11% based on the total weight of said fluorinated polymer **P1.** The mass content of said monomer(s) **M1a** in said fluorinated polymer **P1** may also be between 2% and 20%, advantageously between 2% and 19%, preferably between 2% and 18%, more preferably between 2% and 17%, most preferably between 2% and 16%, in particular between 2% and 15%, more particularly between 2% and 13%, most particularly between 2% and 11% based on the total weight of said fluorinated polymer **P1.** The mass content of said monomer(s) **M1a** in said fluorinated polymer **P1** may also be between 3% and 20%, advantageously between 3% and 19%, preferably between 3% and 18%, more preferably between 3% and 17%, most preferably between 3% and 16%, in particular between 3% and 15%, more particularly between 3% and 13%, most particularly between 3% and 11% based on the total weight of said fluorinated polymer **P1.** The mass content of said monomer(s) **M1a** in said fluorinated polymer **P1** may also be between 4% and 20%, advantageously between 4% and 19%, preferably between 4% and 18%, more preferably between 4% and 17%, most preferably between 4% and 16%, in particular between 4% and 15%, more particularly between 4% and 13%, most particularly between 4% and 11% based on the total weight of said fluorinated polymer **P1.**

Said fluorinated polymer **P1** may comprise recurring units derived from a monomer **M1b.** Preferably, said monomer **M1b** may be present in a content of 0.05% by mol to 5% by mol, in particular from 0.05 to 2 mol.% in said fluorinated polymer **P1.** Said monomer **M1b** of formula R^{a}R^{b}C=C(R^{b})((X¹)ₚC(O)R^{d}) wherein the substituents R^{a}, R^{b} and R^{c} are independently selected from the group consisting of H, CO₂H et C₁-C₅ alkyl ; R^{d} is selected from the group consisting of -NHC(CH₃)₂CH₂C(O)CH₃ and -OR^{d'} wherein R^{d'} is selected from the group consisting of H and C₁-C₁₈ alkyl optionally substituted by one or more functional groups - OH, -CO₂H, -SO₃H, -OC(O)R^{d"}, -C(O)O-R^{d"} or a heterocycle having five or six membered ring comprising at least one nitrogen atom in the ring; R^{d"} being selected from the group consisting of C₁-C₆ alkyl and C₆-C₁₂ aryl optionally substituted by one or more functional groups -OH, -CO₂H, -SO₃H ; p is 0 or 1 ; X¹ is selected from the group consisting of -[-C(O)OC(R^{a'})(R^{b'})C(R^{c'})(R^{d'})-_{w1}- and C₁-C₁₀ alkyl optionally substituted by one or more functional groups -OH, -CO₂H or ester(s) ; w1 is an integer of from 1 to 50, advantageously from 1 to 25, preferably from 1 to 10, in particular from 1 to 5; R^{a'}, R^{b'}, R^{c'}, R^{d'} are independently from each other and independently for each unit w1 selected from the group consisting of H and C₁-C₅ alkyl.

Said heterocycle can be saturated or unsaturated or aromatic. Said heterocycle can be monocyclic or bicyclic. Said heterocycle can be a pyrrole, pyrrolidine, pyridine, piperidine, pyrimidine, pyrazine, 1,4-dihydropyridine, indole, oxindole, isatine, quinoline, isoquinoline, quinazoline, imidazoline, pyrazolidine, 2-pyrrolidone, deltalactam, succinimide, 2-imidazolidinone, 4-imidazolidinone. Said heterocycle can be substituted by oneor more C₁-C₅ alkyl groups. As mentioned above, C₁-C₁₈ alkyl group is optionally substituted by said heterocycle. The latter can be linked to the alkyl chain by the nitrogen atom or any other atom forming the heterocycle. Preferably the heterocycle is 2-pyrrolidone, delta-lactam, succinimide, 2-imidazolidinone, 4-imidazolidinone.

Said monomer **M1b** may be of formula R^{a}R^{b}C=C(R^{b})((X¹)ₚC(O)R^{d}) wherein the substituents R^{a}, R^{b} and R^{c} are independently selected from the group consisting of H, CO₂H et C₁-C₅ alkyl ; R^{d} is selected from the group consisting of -NHC(CH₃)₂CH₂C(O)CH₃ and -OR^{d'} wherein R^{d'} is selected from the group consisting of H and C₁-C₁₈ alkyl optionally substituted by one or more functional groups -OH, -CO₂H, -SO₃H, -OC(O)R^{d"}, -C(O)O-R^{d"} or a heterocycle having five or six membered ring comprising at least one nitrogen atom in the ring; R^{d"} being selected from the group consisting of C₁-C₆ alkyl and C₆-C₁₂ aryl optionally substituted by one or more functional groups -OH, -CO₂H, -SO₃H ; p is 0 or 1 ; X¹ is selected from the group consisting of -[-C(O)OC(R^{a'})(R^{b'})C(R^{c'})(R^{d'})-]_{w1}- and C₁-C₁₀ alkyl optionally substituted by one or more functional groups -OH, -CO₂H or ester(s); w1 is an integer of from 1 to 50, advantageously from 1 to 25, preferably from 1 to 10, in particular from 1 to 5 ; R^{a'}, R^{b'}, R^{c'}, R^{d'} are independently from each other and independently for each unit w1 selected from the group consisting of H and C₁-C₅ alkyl. Preferably, said monomer **M1b** may be of formula R^{a}R^{b}C =C(R^{c})((X¹)ₚC(O)R^{d})wherein the substituents R^{a}, R^{b}and R^{c} are independently selected from the group consisting of H, CO₂H and C₁-C₅ alkyl ; R^{d} is -OR^{d'}with R^{d'} selected from the group consisting of H and C₁-C₁₀ alkyl optionally substituted by one or more functional groups -OH, -CO₂H, -SO₃H, -OC(O)R^{d"}, or -C(O)O-R^{d"}; R^{d"} being selected from the group consisting of C₁-C₆ alkyl or C₆-C₁₂ aryl optionally substituted by one or more functional groups -OH, -CO₂H, -SO₃H ; p is 0 or 1 ; X¹ is selected from the group consisting of -[-C(O)OC(R^{a'})(R^{b'})C(R^{c'})(R^{d'})-]_{w1}- and C₁-C₁₀ alkyl optionally bearing one or more functional groups -OH, -CO₂H or ester(s) ; with w1 being an integer of from 1 to 50, advantageously of from 1 to 25, preferably of from 1 to 10, in particular of from 1 to 5; R^{a'}, R^{b'}, R^{c'}, R^{c'} are independently from each other and independently for each unit w1, selected from the group consisting of H and C₁-C₅ alkyl. More preferably, said monomer **M1b** may be of formula R^{a}R^{b}C =C(R^{c})((X¹)ₚC(O)R^{d})wherein the substituents R^{a}, R^{b}and R^{c} are independently selected from the group consisting of H, CO₂H et C₁-C₅ alkyl ; R^{d} is -OR^{d'} with R^{d'} selected from the group consisting of H and C₁-C₁₀ alkyl optionally substituted by one or more functional groups -OH, -CO₂H, -SO₃H, -OC(O)R^{d"}, or -C(O)O-R^{d"}; R^{d"} being selected from the group consisting of C₁-C₆ alkyl or C₆-C₁₂ aryl optionally substituted by one or more functional groups -OH, -CO₂H, -SO₃H. In particular, said monomer **M1b** may be of formula R^{a}R^{b}C=C(R^{c})(C(O)R^{d}) wherein the substituents R^{a}, R^{b} and R^{c} are independently selected from the group consisting of H, CO₂H et C₁-C₃ alkyl; R^{d} is -OR^{d'} with R^{d'} selected from the group consisting of H and C₁-C₅ alkyl optionally substituted by one or more functional groups -OH, -CO₂H, -SO₃H, -OC(O)R^{d"}, or -C(O)O-R^{d"}; R^{d"} being selected from the group consisting of C₁-C₆ alkyl or C₆-C₁₂ aryl optionally substituted by one or more functional groups -OH, -CO₂H, -SO₃H. More particularly, said monomer **M1b** may be acrylic acid, methyl acrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, hydroxypropyl methacrylate, hydroxybutyl methacrylate, hydroxyethyl methacrylate, hydroxyethyl acrylate, acrylate hydroxypropyl acrylate, hydroxybutyl acrylate, methacrylic acid, methyl methacrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, ureido methacrylate, monomers of formula CH₂=CH(CO₂CH₂CH₂CO₂H), CH₂=CH(CO₂CH₂CH₂-O-C(O)-CH₂CH₂CO₂H), CH₂=CH(CO₂CH₂CH₂CH₂-O-C(O)-CH₂CH₂CO₂H), CH₂=CH(CO₂CH(CH₃)CH₂-O-C(O)-CH₂CH₂CO₂H),CH₂=CH(CO₂CH₂CH₂-O-C(O)-C₆H₄CO₂H), CH₂=CH(CO₂CH₂CH₂CH₂CH(CO₂H)CH₂CH₂CO₂H); and mixtures thereof. Said fluorinated polymer **P1** may comprise one or more recurring units derived from said monomer **M1b** as defined herein.

In a particular embodiment, said fluorinated polymer **P1** comprises recurring units derived from vinylidene fluoride, recurring units derived from monomer **M1b,** and optionally recurring units derived from said monomer **M1a;** said monomer **M1a** and **M1b** being as defined above. For example, said fluorinated polymer **P1** may comprise recurring units derived from vinylidene fluoride, recurring units derived from said monomer **M1b** being selected from the group consisting of acrylic acid, methyl acrylate, ethyl acrylate, propyl acrylate, hydroxypropyl methacrylate, hydroxyethyl methacrylate, hydroxyethyl acrylate, hydroxypropyl acrylate, methacrylic acid, methyl methacrylate, ethyl methacrylate, propyl methacrylate, monomers of formula CH₂=CH(CO₂CH₂CH₂CO₂H), CH₂=CH(CO₂CH₂CH₂-O-C(O)-CH₂CH₂CO₂H), CH₂=CH(CO₂CH₂CH₂CH₂-O-C(O)-CH₂CH₂CO₂H), CH₂=CH(CO₂CH(CH₃)CH₂-O-C(O)-CH₂CH₂CO₂H),CH₂=CH(CO₂CH₂CH₂-O-C(O)-C₆H₄CO₂H), CH₂=CH(CO₂CH₂CH₂CH₂CH(CO₂H)CH₂CH₂CO₂H), and mixtures thereof ; and optionally recurring units derived from said monomer **M1a** being hexafluoropropylene. Said fluorinated polymer **P1** may comprise a functional group selected from the group consisting of carboxylic acid, carboxylic acid anhydride, carboxylic acid esters, epoxy groups, amide, hydroxyl, carbonyl, mercapto, sulfide, oxazoline, phenolics, ester, ether, siloxane, sulfonic, sulfuric, phosphoric, or phosphonic; preferably selected from the group consisting of carboxylic acid, carboxylic acid anhydride, carboxylic acid esters, epoxy groups, hydroxyl, carbonyl, mercapto, sulfide, ester, ether, sulfonic, phosphoric or phosphonic. Functional groups may improve adhesion on metal. The functional group may be introduced within the polymer chain by grafting or copolymerization with a monomer (for example with monomer **M1b** as disclosed above). According to another embodiment, the functional group may be introduced within the polymer chain via a chain transfer agent used during the polymerization process. The chain transfer agent may be a polymer with a molecular weight lower than or equal to 20000 g/mol and bearing functional groups selected from the group consisting of: carboxylic acid, carboxylic acid anhydride, carboxylic acid esters, epoxy groups (such as glycidyl), amide, hydroxyl, carbonyl, mercapto, sulfide, sulfide, oxazoline, phenolics, ester, ether, siloxane, sulfonic, sulfuric, phosphoric, phosphonic. An example of such chain transfer agent is acrylic acid oligomers. According to a preferred embodiment, the chain transfer agent is an acrylic acid oligomer with a molecular weight lower than or equal to 20000 g/mol. Alternatively, the functional group may be introduced by an oligomeric or polymeric component comprising said functional group and mixed with the fluorinated polymer **P1.** The oligomeric or polymeric component may be impregnated in, mixed with or intimately mixed with the fluorinated polymer **P1.** In this case, the functional group may be derived from a (meth)acrylic acid compound selected from acrylic acid, methacrylic acid, methyl (meth)acrylate, ethyl (meth)acrylate, hydroxyethyl(meth)acrylate, hydroxypropyl(meth)acrylate, hydroxybutyl(meth)acrylate, hydroxyethylhexyl(meth)acrylate, and acryloyloxy propylsuccinate. For example, the functional group may be an oligomer or polymer comprising repeating units from a monomer selected from the group consisting of acrylic acid, methacrylic acid, methyl (meth)acrylate, ethyl (meth)acrylate, hydroxyethyl(meth)acrylate, hydroxypropyl(meth)acrylate, hydroxybutyl(meth)acrylate, hydroxyethylhexyl(meth)acrylate, acryloyloxyethylsuccinate, and acryloyloxy propylsuccinate. Said oligomer or polymer has an average molecular weight by weight lower than or equal to 100000 g/mol, advantageously lower than 80000 g/mol, preferably lower than 60000 g/mol, more preferentially lower than 40000 g/mol, in particular lower than 20000 g/mol. The average molecular weight is determined by GPC using a Waters 2695e device coupled with a Wyatt NEON refractometer equipped with two PL Gel mixed C columns and a guard column (7.8 mm I.D. × 30 cm, 5 µm) under the following conditions: Temperature: 35°C; Flow rate: 1.0 mL/min; injection volume: 100 µL. Samples are prepared at a concentration of 1 mg/ml in THF. Twelve samples of poly(methylmethacrylate) with a molecular weight of 535 to 2,210,000 g/mol are used as the calibration standard. Said oligomer or polymer is preferably added during the production process of the fluorinated polymer **P1.** The content in functional groups content is at least 0.01% molar, preferably at least 0.1% molar, and not more than 15% molar, preferably not more than 10% molar. Said fluorinated polymer **P1** of the present invention can be obtained by known polymerization methods for example emulsion or suspension polymerization. According to a preferred embodiment, said fluorinated polymer **P1** is prepared by an emulsion polymerization process in the presence of a non-fluorinated surfactant. Thus, said fluorinated polymer **P1** may comprise between 10 ppm and 2% by weight of a non-fluorinated surfactant comprising polyethylene glycol or polypropylene glycol segments. Preferably, the non-fluorinated surfactant has an HLB value of 1 to 20, in particular an HLB value of 1 to 5 or 10 to 15. In particular, the non-fluorinated surfactant comprises at least one polyethylene glycol segment and at least one polypropylene glycol segment, and has an HLB value of 1 to 5 and an average molecular weight by weight of 5000 to 10000 g.mol-1. Alternatively, said surfactant comprises at least one segment of polyethylene glycol and at least one segment of polypropylene glycol, and has an HLB value of 10 to 15 and an average molecular weight by weight of 500 to 2500 g.mol-1. According to a preferred embodiment, said fluorinated polymer **P1** is prepared by a suspension polymerization process, preferably in the presence of a suspending such as polyvinyl alcohol (PVA) or a compound with a cellulose moiety such as methylcellulose, hydroxypropyl methylcellulose, carboxymethylcellulose.

The fluorinated polymer **P1** may have a melting temperature ranging from 130°C to 180°C, preferably from 135°C to 180°C, more preferably from 140°C to 180°C, most preferably from 145°C to 180°C, in particular from 150°C to 180°C measured by DSC according to the ASTM E794-06 (2018) standard test method.

According to certain embodiments, the vinylidene fluoride contained in the said fluorinated polymer **P1** is biosourced. The term "bio-based" means "from biomass". This improves the ecological footprint of the polymer. Bio-based VDF can be characterized by a renewable carbon content, i.e. carbon of natural origin and from a biomaterial or biomass, of at least 1% atomic as determined by the 14C content according to the NF EN 16640 standard. The term "renewable carbon" indicates that carbon is naturally occurring and comes from a biomaterial (or biomass), as shown below. According to some embodiments, the bio-carbon content of the VDF may be greater than 5%, preferably greater than 10%, preferably greater than 25%, preference greater than or equal to 33%, preferably greater than 50%, preference greater than or equal to 66%, preference greater than 75%, preference greater than 90%, preference greater than 95%, preferably greater than 98%, preferably greater than 99%, advantageously equal to 100%.

### Hydrophilic polymer P2

In the present invention, the binder comprises a hydrophilic polymer P2. Said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₁₈ alkyl optionally substituted by one or more -OH, -CO₂H, -SO₃H, -OC(O)R⁸, -C(O)OR⁸ or a five- to six-membered heterocycle comprising at least nitrogen atom in the ring ; R⁸ being selected from the group consisting of C₁-C₆ alkyl and C₆-C₁₂ aryl optionally substituted with one or more -OH, -CO₂H, -SO₃H functional group(s). Preferably, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₁₅ alkyl optionally substituted by one or more -OH, -CO₂H, -SO₃H, -OC(O)R⁸, -C(O)OR⁸ or a five- to six-membered heterocycle comprising at least nitrogen atom in the ring ; R⁸ being selected from the group consisting of C₁-C₆ alkyl and C₆-C₁₀ aryl optionally substituted with one or more -OH, -CO₂H, -SO₃H functional group(s). More preferably, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₁₀ alkyl optionally substituted by one or more -OH, -CO₂H, -SO₃H, -OC(O)R⁸, -C(O)OR⁸ or a five- to six-membered heterocycle comprising at least nitrogen atom in the ring ; R⁸ being selected from the group consisting of C₁-C₅ alkyl and C₆ aryl optionally substituted with one or more -OH, -CO₂H, -SO₃H functional group(s). Most preferably, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₅ alkyl ; R⁶ is -OR⁷ wherein R⁷ is selected from the group consisting of C₁-C₅ alkyl optionally substituted by one or more -OH, -CO₂H, -SO₃H, -OC(O)R⁸, -C(O)OR⁸ or a five- to six-membered heterocycle comprising at least nitrogen atom in the ring ; R⁸ being selected from the group consisting of C₁-C₅ alkyl optionally substituted with one or more -OH, -CO₂H, -SO₃H functional group(s). In particular, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and C₁-C₃ alkyl ; R⁶ is -OR⁷ wherein R⁷ is selected from the group consisting of C₁-C₃ alkyl optionally substituted by one or more -OH, -CO₂H, -SO₃H, -OC(O)R⁸, -C(O)O-R⁸ or a five- to six-membered heterocycle comprising at least nitrogen atom in the ring; R⁸ being selected from the group consisting of C₁-C₃ alkyl optionally substituted with one or more -OH, -CO₂H, - SO₃H functional group(s). More particularly, said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of H and CH₃ ; R⁶ is -OR⁷ wherein R⁷ is selected from the group consisting of C₁-C₃ alkyl optionally substituted by one or more -OH, -CO₂H.

Said hydrophilic polymer **P2** may further comprise recurring units derived from other monomers, i.e. one or more monomers **M2b** as detailed below. Hence, the hydrophilic polymer **P2** comprises recurring units derived from a monomer **M2b** selected from the group consisting of monomers of formula (II), (III), (IV), (V), (VI), (VII), (VIII) or mixtures thereof

R¹⁰R¹¹C=C(R¹²)C(O)OH (II)

R¹³R¹⁴C=C(R¹⁵)(OC(O)R¹⁶) (III);

R¹⁷R¹⁸C=CR¹⁹C(O)OC(O)CR²⁰=CR²¹R²² (IV);

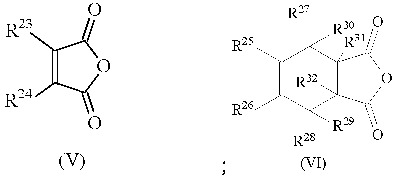

R³³R³⁴C=CR³⁵(CN) (VII);

R³⁶R³⁷C=CR³⁸(C(O)NR³⁹R⁴⁰) (VIII);

wherein R¹⁰, R¹¹ and R¹² are independently selected from the group consisting of **H,** CO₂H and C₁-C₅ alkyl;
R¹³, R¹⁴ and R¹⁵ are independently selected from the group consisting of H and C₁-C₅ alkyl;
R¹⁶ is C₁-C₅ alkyl;
R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴, R³⁵, R³⁶, R³⁷
and R³⁸ are independently selected from the group consisting of H and C₁-C₅ alkyl ; R³⁹ and R⁴⁰ are independently selected from the group consisting of H and C₁-C₁₀ alkyl optionally substituted by one or more functional groups -OH, -CO₂H, SO₃H, -C(O)OR⁴¹, - OC(O)R⁴¹ ; R⁴¹ is selected from the group consisting of C₁-C₅ alkyl and C₆-C₁₂ aryl optionally substituted by one or more functional group CO₂H.

Preferably, the hydrophilic polymer **P2** comprises, in addition to recurring units derived from the monomer **M2a,** recurring units derived from a monomer **M2b** selected from the group consisting of monomers of formula (II), (III), (IV), (V), (VI), (VII), (VIII)

R¹⁰R¹¹C=C(R¹²)C(O)OH (II)

R¹³R¹⁴C=C(R¹⁵)(OC(O)R¹⁶) (III);

R¹⁷R¹⁸C=CR¹⁹C(O)OC(O)CR²⁰=CR²¹R²² (IV) ;

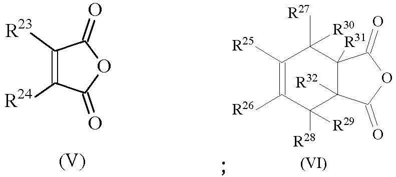

R³³R³⁴C=CR³⁵(CN) (VII);

R³⁶R³⁷C=CR³⁸(C(O)NR³⁹R⁴⁰ (VIII);

wherein R¹⁰, R¹¹ and R¹² are independently selected from the group consisting of H, CO₂H and C₁-C₅ alkyl;
R¹³, R¹⁴ and R¹⁵ are independently selected from the group consisting of H and C₁-C₅ alkyl; R¹⁶ is C₁-C₅ alkyl;
R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴, R³⁵, R³⁶, R³⁷ and R³⁸ are independently selected from the group consisting of H and C₁-C₅ alkyl;
R³⁹ and R⁴⁰ are independently selected from the group consisting of H and C₁-C₅ alkyl optionally substituted by one or more functional groups -OH, -CO₂H, SO₃H, -C(O)OR⁴¹, - OC(O)R⁴¹ ; R⁴¹ is selected from the group consisting of C₁-C₅ alkyl and C₆ aryl optionally substituted by one or more functional group CO₂H.

More preferably, the hydrophilic polymer **P2** comprises, in addition to recurring units derived from the monomer **M2a,** recurring units derived from a monomer **M2b** selected from the group consisting of monomers of formula (II), (III), (V), (VI), (VII),

R¹⁰R¹¹C=C(R¹²)C(O)OH (II)

R¹³R¹⁴C=C(R¹⁵)(OC(O)R¹⁶) (III);

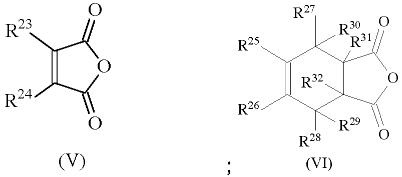

R³³R³⁴C=CR³⁵(CN) (VII);

wherein R¹⁰, R¹¹ and R¹² are independently selected from the group consisting of H and C₁-C₃ alkyl;
R¹³, R¹⁴ and R¹⁵ are independently selected from the group consisting of H and C₁-C₃ alkyl ; R¹⁶ is C₁-C₃ alkyl;
R¹⁷, R¹⁸, R¹⁹, R²³, R²⁴, R²⁵, R²⁶, R²⁷, R²⁸, R²⁹, R³⁰, R³¹, R³², R³³, R³⁴ and R³⁵ are independently selected from the group consisting of H and C₁-C₃ alkyl.

Most preferably, the hydrophilic polymer **P2** comprises, in addition to recurring units derived from the monomer **M2a,** recurring units derived from a monomer **M2b** selected from the group consisting of monomers of formula (II), (V), (VI),

R¹⁰R¹¹C=C(R¹²)C(O)OH (II)

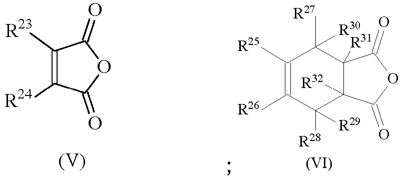

wherein R¹⁰, R¹¹ and R¹² are independently selected from the group consisting of H and CH₃ ; R²³, R²⁴, R²⁵, R²⁶, R²⁷, R²⁸, R²⁹, R³⁰, R³¹ and R³² are independently selected from the group consisting of H and CH₃.

Particularly, the hydrophilic polymer **P2** comprises, in addition to recurring units derived from the monomer **M2a,** recurring units derived from a monomer **M2b** selected from the group consisting of monomers of formula R¹⁰R¹¹C=C(R¹²)C(O)OH (II)
wherein R¹⁰, R¹¹ and R¹² are independently selected from the group consisting of H and CH₃. Said hydrophilic polymer **P2** may comprise at least 70 mol% of recurring units derived from a monomer **M2a** as defined in the present invention, at least 1 mol% of recurring units derived from a monomer **M2b** of formula (II) and optionally at most 30 mol% of recurring units derived from a monomer **M2b** of formula (III), (V), (VI), (VII) or (VIII). Preferably, said hydrophilic polymer **P2** may comprise at least 75 mol% of recurring units derived from a monomer **M2a** as defined in the present invention, at least 3 mol% of recurring units derived from a monomer **M2b** of formula (II) and optionally at most 20 mol% of recurring units derived from a monomer **M2b** of formula (III), (V), (VI), (VII) or (VIII). More preferably, said hydrophilic polymer **P2** may comprise at least 80 mol% of recurring units derived from a monomer **M2a** as defined in the present invention, at least 5 mol% of recurring units derived from a monomer **M2b** of formula (II) and optionally at most 15 mol% of recurring units derived from a monomer **M2b** of formula (III), (V), (VI), (VII) or (VIII). Most preferably, said hydrophilic polymer **P2** may comprise at least 85 mol% of recurring units derived from a monomer **M2a** as defined in the present invention, at least 5 mol% of recurring units derived from a monomer **M2b** of formula (II) and optionally at most 10 mol% of recurring units derived from a monomer **M2b** of formula (III), (V), (VI), (VII) or (VIII).

In particular, said hydrophilic polymer **P2** may comprise at least 85 mol% of recurring units derived from a monomer **M2a** as defined in the present invention, at most 15 mol% of recurring units derived from a monomer **M2b** of formula (II) and optionally at most 5 mol% of recurring units derived from a monomer **M2b** of formula (III), (V), (VI), (VII) or (VIII). More particularly, said hydrophilic polymer **P2** may comprise at least 85 mol% of recurring units derived from a monomer **M2a** as defined in the present invention, at most 15 mol% of recurring units derived from a monomer **M2b** of formula (II).

Said hydrophilic polymer **P2** may have weight average molecular weight Mw greater than 30000 g/mol, advantageously greater than 40000 g/mol, preferably greater than 50000 g/mol, more preferably greater than 65000 g/mol, in particular greater than 80000 g/mol, more particularly greater than 100000 g/mol. The average molecular weight is determined by GPC using a Waters 2695e device coupled with a Wyatt NEON refractometer equipped with two PL Gel mixed C columns and a guard column (7.8 mm I.D. × 30 cm, 5 µm) under the following conditions: Temperature: 35°C; Flow rate: 1.0 mL/min; injection volume: 100 µL. Samples are prepared at a concentration of 1 mg/ml in THF. Twelve samples of poly(methylmethacrylate) with a molecular weight of 535 to 2,210,000 g/mol are used as the calibration standard.

Process for preparing the binder composition

The binder composition according to the present invention can be prepared following the steps detailed below. The binder composition is prepared by providing agglomerated particles as defined in the present invention.

Said agglomerated particles are prepared by a method comprising the steps of:
a) providing powder particles having a maximum diameter lower than 100 µm;
b) applying pressure on the agglomerated particles provided in step a) to form said agglomerated particles as defined in the present invention.

Advantageously, step b) is carried out by applying a pressure greater than 100kg/cm2, preferably a pressure greater than 200kg/cm2, more preferably a pressure greater than 300kg/cm2, most preferably a pressure greater than 350kg/cm2, particularly a pressure greater than 400kg/cm2, more particularly a pressure greater than 450kg/cm2. The pressure can be applied by any means known in the art.

Advantageously, said powder particles provided in step a) have a maximum diameter lower than 90 µm, preferably said powder particles provided in step a) has a maximum diameter lower than 80 µm, more preferably said powder particles provided in step a) has a maximum diameter lower than 70 µm, most preferably said powder particles provided in step a) has a maximum diameter lower than 60 µm, particularly said powder particles provided in step a) has a maximum diameter lower than 50 µm, more particularly said powder particles provided in step a) has a maximum diameter lower than 40 µm.

In a preferred embodiment, said powder particles provided in step a) have an average diameter lower than 50 µm, advantageously lower than45 µm, preferably lower than 40 µm, more preferably lower than 35 µm, most preferably lower than 30 µm, particularly lower than 30 µm, more particularly lower than 25 µm.

In particular, said agglomerated particles, obtained in step b), have a 10% mass loss temperature greater than the 10% mass loss temperature of the powder particles provided in step a). The 10% mass loss is measured according to the same method as disclosed above. In a preferred embodiment, said agglomerated particles obtained in step b) have a 10% mass loss temperature greater than 440°C, preferably greater than 444°C, and said powder particles provided is step a) have a 10% mass loss temperature lower than 440°C. In a preferred embodiment, the viscosity of a 10wt% solution of said agglomerated particles, obtained in step b), at 10.7/s is greater than the 10wt% solution of the powder particles provided in step a). The viscosity of a 10wt% solution of said powder particles provided in step a) is lower than 11 Pa.s at 10.7/s.

### Electrode-forming composition & electrode prepared therefrom.

In another aspect of the present invention an electrode-forming composition is provided. The electrode-forming composition is suitable for use in the preparation of electrodes for electrochemical devices. Preferably, the electrode-forming composition comprises at least one electrode active material, a binder composition according to the present invention, and optionally at least one conductive agent.

In a preferred embodiment, the electrode-forming composition has the following mass composition:
a. 50% to 99.95% electrode active material, preferably 50% to 99%,
b. 0% to 25% conductive agent, preferably 0.5% to 25%,
c. 0.05% to 25% of said binder depending on the invention, preferably 0.5% to 25%,
d. 0% to 25% of at least one additive selected from the group consisting of a plasticizer, an ionic liquid, a dispersing agent for a conductive additive, and a flow aid, preferably 0% to 5%;
the sum of all these percentages being 100%.

The conductive agents in the electrode are composed of one or more materials that can improve conductivity. Some examples include carbon blacks such as acetylene black, Ketjen black; carbon fibers, such as carbon nanotube, carbon nanofiber, vapor phase growth carbon fiber; metal powders such as SUS (steel use stainless) powder, or aluminum powder.

The electrode active materials in electrode compositions are materials that are capable of storing and releasing lithium ions.

In particular, for a negative electrode (i.e. anode), that electrode active material is selected from the group consisting of a lithium alloy, lithium metal, a metal oxide, a carbon material such as graphite or hard carbon, silicon and its derivatives SiOx, silicone, graphite-silicon composite, a silicon alloy and Li₄Ti₅O₁₂ or a mixture thereof. The shape of the negative electrode active material is not particularly limited but is preferably particulate.

In particular, for a positive electrode (i.e. cathode), said electrode active material is selected from the group consisting of LiCoO₂, Li(Ni, Co, Al)O₂, Li₍₁₊ₓ₎NiₐMn_{b}Co_{c} (x represents a real number of 0 or more, a = 0.9, 0.8, 0.6, 0.5, or 1/3, b = 0.05, 0.1, 0.2, 0.3, or 1/3, c = 0.05, 0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a spinel Li Mn substituted by a different element having a composition represented by Li₁₊ₓMn_{2-x-y}M_{y}O₄, M representing at least one metal chosen from Al, Mg, Co, Fe, Ni, and Zn, x and y independently representing a real number between 0 and 2, lithium titanate LiₓTiO_{y} - x and y independently representing a real number between 0 and 2, and a lithium metal phosphate having a composition represented by LiMPO₄, with M representing Fe, Mn, Co, or Ni. The shape of the positive electrode active material is not particularly limited but is preferably particulate. In addition, the surface of each of the materials described above can be coated. The coating material is not particularly limited as long as it has lithium-ion conductivity and contains a material that can be held in the form of a coating layer on the surface of the active material. Examples of the coating material include LiNbO₃, Li₄Ti₅O₁₂, and Li₃PO₄.

The electrode can be prepared by a process comprising the following steps:
A) providing an electrode-forming composition comprising the binder composition according to the present invention; at least one electrode active material and a solvent and optionally, at least one electrically conductive additive;
B) providing a metallic substrate with at least one surface;
C) Applying the electrode-forming composition provided in step a) to said at least one surface of the metallic substrate provided in step B), thereby providing an assembly comprising a metal substrate coated with said electrode-forming composition on at least one surface; and
D) drying of the assembly provided for in step C) to form the electrode.

The present invention provides an electrode for Li-ion secondary battery comprising a current collector, at least one side of said current collector being coated with the electrode-forming composition according to the present invention.

The present invention provides a Li-ion secondary battery comprising an anode, a cathode and a separator, wherein said anode or said cathode is an electrode according to the present invention.

### Examples

### Preparation of the agglomerated particles

A blend containing 70wt% of polyvinylidene fluoride and 30wt% of a copolymer of methyl methacrylate and methacrylic acid (weight ratio 90/10 methyl methacrylate / methacrylic acid) are used as powder particles. Said powder particles have an average diameter of 5.70 µm and a maximum diameter of 19.9 µm. 18g of said powder particles were placed in a plastic bag and sealed. A pressure was applied on the sample using a Dake Corporation hydraulic press at 25°C. The pressure was set to 500kg/cm2 for one minute to obtain the agglomerated particles according to the present invention. Said agglomerated particles have an average diameter of 175 µm and a maximum diameter of 1290 µm.

### Preparation of the electrode

The electrode composition comprises a binder composition consisting of the agglomerated particles according to the present invention, active material NMC 811 (Umicore CVV14Tn) and C65 (Imerys) carbon particles. The weight ratio of NMC/binder composition/C65 is 97/1.5/1.5. The formulation was conducted via a wet mixing process in a Thinky ARE-310 centrifugal mixer. The binder solution was mixed with conductive carbon at 2000RPM for 6 mins. NMC811 was added to the mixture and mixed for another two minutes at 2000RPM. Aliquots of NMP and subsequent one minute 2000RPM mixes were conducted to reach the final slurry solids of 77.9%. The total mixing time for the formulation was 13 minutes.

The performance of the electrode was evaluated based on peel measurement. The 180 degree peel testing method follows ASTM D903 using an Instron 3343 series. The coated electrode is placed coating side down on 3M 410 double sided taped, and then peeled upward at a fixed rate of 50mm/min. The resulting value is obtained in N/m.

The results are reported in table 1 below.

**[Table 1]**

| Binder | Peel (N/m) |
|---|---|
| Powder particles (comparative) | 181.5 |
| Agglomerated particles (Invention) | 189.6 |

As demonstrated by the results reported above, a binder composition comprising the agglomerated particles according to the present invention shows an improved adhesion compared to the powder particles. The binder composition of the present invention has therefore improved properties compared to binder composition of the art.

## Claims

1. Binder composition comprising agglomerated particles having an average diameter lower than 400 µm and the maximum diameter of said agglomerated particles is greater than 600 µm.

2. Binder composition according to the previous claim wherein at least 1% by weight of the agglomerated particles has a diameter greater than 600 µm.

3. Binder composition according to any one of the previous claims wherein at least 95% by weight of the agglomerated particles has a diameter lower than 400 µm.

4. Binder composition according to any one of the previous claims wherein the viscosity of a 10wt% solution in N-methyl-2-pyrrolidone of said agglomerated particles at 10.7 s⁻¹ is greater than 11 Pa.s.

5. Binder composition according to any one of the previous claims wherein said agglomerated particles comprises a fluorinated polymer **P1** and a hydrophilic polymer **P2.**

6. Binder composition according to the previous claim wherein said fluoropolymer P1 comprises recurring units derived from a fluorinated monomer **M1a** selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)ₙCH₂OCF=CF₂ wherein n is 1, 2, 3, 4 or 5; a monomer of formula R¹CH₂OCF=CF₂ wherein R¹ is hydrogen atom or F(CF₂)m and m is 1, 2, 3 or 4; a monomer of formula R²OCF=CH₂ wherein R2 is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof.

7. Binder composition according to any one of the previous claims 5 or 6 wherein said hydrophilic polymer **P2** comprises recurring units derived from a monomer **M2a** of formula R³R⁴C=C(R⁵)C(O)R⁶ (I) wherein R³, R⁴ and R⁵ are independently selected from the group consisting of Hand C₁-C₅ alkyl; R⁶ is -OR⁷wherein R⁷ is selected from the group consisting of C₁-C₁₈ alkyl optionally substituted by one or more -OH, - CO₂H, -SO₃H, -OC(O)R⁸, -C(O)O-R⁸ or a five- to six-membered heterocycle comprising at least nitrogen atom in the ring ; R⁸ being selected from the group consisting of C₁-C₆ alkyl and C₆-C₁₂ aryl optionally substituted with one or more - OH, -CO₂H, -SO₃H functional group(s) ; and
optionally said hydrophilic polymer **P2** comprises recurring units derived from a monomer **M2b** selected from the group consisting of monomers of formula (II), (III), (IV), (V), (VI), (VII), (VIII) or mixtures thereof
R¹⁰R¹¹C=C(R¹²)C(O)OH (II)
R¹³R¹⁴C=C(R¹⁵)(OC(O)R¹⁶) (III);
R¹⁷R¹⁸C=CR¹⁹C(O)OC(O)CR²⁰=CR²¹R²² (IV) ; 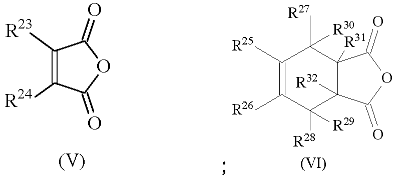
R³³R³⁴C=CR³⁵(CN) (VII);
R³⁶R³⁷C=CR³⁸(C(O)NR³⁹R⁴⁰) (VIII);
wherein R¹⁰, R¹¹ and R¹² are independently selected from the group consisting of H, CO₂H and C₁-C₅ alkyl;
R¹³, R¹⁴ and R¹⁵ are independently selected from the group consisting of H and C₁-C₅ alkyl;
R¹⁶ is C₁-C₅ alkyl;
R¹⁷, R¹⁸, R¹⁹, R²⁰, R²¹, R²², R²³, R²⁴, R²⁵, R²⁶, R²⁷, R²⁸, R²⁹, R³⁰, R³¹, R³², R³³, R³⁴, R³⁵, R³⁶, R³⁷ and R³⁸ are independently selected from the group consisting of H and C₁-C₅ alkyl ;
R³⁹ and R⁴⁰ are independently selected from the group consisting of H and C₁-C₁₀ alkyl optionally substituted by one or more functional groups -OH, -CO₂H, SO₃H, - C(O)OR⁴¹, -OC(O)R⁴¹ ; R⁴¹ is selected from the group consisting of C₁-C₅ alkyl and C₆-C₁₂ aryl optionally substituted by one or more functional group CO₂H.

8. Binder composition according to any of the previous claims wherein the 10% mass loss temperature of said agglomerated particles is greater than 440°C.

9. Electrode-forming composition for Li-ion secondary battery comprising the binder composition according to any one of the previous claims, an active material and optionally a conductive agent.

10. Electrode for Li-ion secondary battery comprising a current collector, at least one side of said current collector being coated with the electrode-forming composition according to the previous claim.

11. Li-ion secondary battery comprising an anode, a cathode and a separator, wherein said anode or said cathode is an electrode according to the previous claim.

12. A method to prepare agglomerated particles as defined in any one of claims 1 to 7, comprising the steps of:
a) providing powder particles having a maximum diameter lower than 100 µm;
b) applying pressure on the agglomerated particles provided in step a) to form said agglomerated particles as defined in claims 1 to 7.

13. A method according to the previous claim wherein step b) is carried out by applying a pressure greater than 100kg/cm2.

14. A method according to any one of the previous claims 12 or 13 wherein said agglomerated particles, obtained in step b), have a 10% mass loss temperature greater than the 10% mass loss temperature of the powder particles provided in step a).

15. A method according to any one of the previous claims 12 to 14 wherein the viscosity of a 10wt% solution of said agglomerated particles, obtained in step b), at 10.7/s is greater than the 10wt% solution of the powder particles provided in step a).
